Europäisches Patentamt

European Patent Office

Office européen des brevets

(11) Publication number: **0 179 360**
**B1**

(12) **EUROPEAN PATENT SPECIFICATION**

(45) Date of publication of patent specification: 02.01.91

(21) Application number: **85112854.6**

(22) Date of filing: **10.10.85**

(51) Int. Cl.⁵: **B 22 C 1/22,** C 08 G 8/04, C 08 G 8/10

(54) **Phenolic resin binders for foundry and refractory uses.**

(30) Priority: **12.10.84 US 660169**
**10.06.85 US 742688**

(43) Date of publication of application:
**30.04.86 Bulletin 86/18**

(45) Publication of the grant of the patent:
**02.01.91 Bulletin 91/01**

(84) Designated Contracting States:
**BE DE FR GB IT NL SE**

(56) References cited:
EP-A- 116 308
DE-B-1 231 373
US-A-4 072 531
US-A-4 082 718
US-A-4 327 185
US-A-4 427 800

**The file contains technical information submitted after the application was filed and not included in this specification**

(73) Proprietor: **ACME RESIN CORPORATION**
**1401 Circle Avenue**
**Forest Park, Ill. 60130 (US)**

(72) Inventor: **Iyer, Raja**
**3125 Woodworth Place**
**Hazelcrest, Ill. 60429 (US)**
Inventor: **Shah, Rasik C.**
**9259 Dee Road**
**Des Plaines, Ill. 60016 (US)**
Inventor: **Laitar, Robert**
**2533 Crabtree Avenue**
**Woodridge, Ill. 60515 (US)**

(74) Representative: **Lederer, Franz, Dr. et al**
**Lederer, Keller & Riederer Patentanwälte Lucile-Grahn-Strasse 22**
**D-8000 München 80 (DE)**

Courier Press, Leamington Spa, England.

**Description**

This invention relates to modified phenolic resole resins useful as refractory binders and as binders for making foundry sand cores and molds. The binders exhibit excellent storage properties.

Foundry cores and molds used in making metal castings are normally prepared from a composition including sand or similar material and a curable or polymerizable binder coated on the sand particles. The purpose of this binder coating is to permit the mixture to be hardened after it is first shaped or molded into a desired form. Typically, after the aggregate material and binder have been mixed, the resulting mixture is rammed, blown or otherwise formed to the desired shape or pattern and then cured with the use of catalysts and/or heat to a solid, cured state.

When molten metal is poured into a sand mold, it solidifies taking the shape or pattern of the mold. The temperature of the molten metal is so high that the resin binder burns out of the mold. The mold then collapses leaving free-flowing sand that can be reused to make a new mold.

Different processes for forming molds and cores have been developed in the foundry industry. One process known as the "hot-box" process requires that the mixture of aggregate material and binder be cured and hardened in a holding pattern or core box while subjected to heat. Another process using a binder system which does not require heating in order to bring about curing or hardening, is known as a "no-bake" process. The present invention is directed to an improved resin for use in this "no-bake" process.

Phenol-formaldehyde resole resins have been used as binders in the "no-bake" process for making foundry cores and molds. Although these resole resins offer a favorable raw material cost when compared with other resins used in this process, they have certain limitations. Such resole resins have a limited shelf-life and must be used promptly or stored under refrigeration during warm weather. In addition, when the previously-used resole resins are mixed with sand and catalysts, the mixture has to be placed in the mold immediately or it becomes useless. Furthermore, before these resole resins can be mixed with reclaimed sand from collapsed molds, the sand must be cooled to room temperature. Otherwise, the new molds have little strength.

Phenolic resole resins are also used as refractory binders. A refractory is a ceramic material of low thermal conductivity characterized by the ability to withstand extremely high temperatures.

Refractories are used for lining steel furnaces and other high-temperature applications. They are normally cast in the form of brick with some type of binder to assure their stability.

However, conventional resole resins have certain drawbacks when used as refractory binders. This is particularly true when the refractory is prepared from basic material such as magnesia. When magnesia granules are mixed with the resole resins, the mixtures tend to harden in a comparatively short time. This reduces the time that the mix can be retained before it must be shaped into bricks or other desired shapes. Furthermore, the articles produced from these mixtures often show poor strength and durability.

US—A—4 427 800 discloses a liquid phenolic resole resin having a methylol group index of about 0.8 or less for refractory uses.

EP—A—116 308 discloses modified phenolic resoles containing more than 5 mole % of alkoxymethylene-groups and having predominantly ortho-ortho benzylic ether linkages, which resoles are reacted with organic polyisocyanates to prepare rigid polyurethane foams.

It has been found that a certain modified phenolic resole resin does not have the shortcomings of conventional resole resins. This resin can be stored at room temperature for long periods of time without undergoing deterioration. It is useful as a sand binder in the "no-bake" processes for making foundry cores and molds. In addition, it is a good binder for refractories, and refractory mixes of magnesia particles with this resin show excellent storage stability.

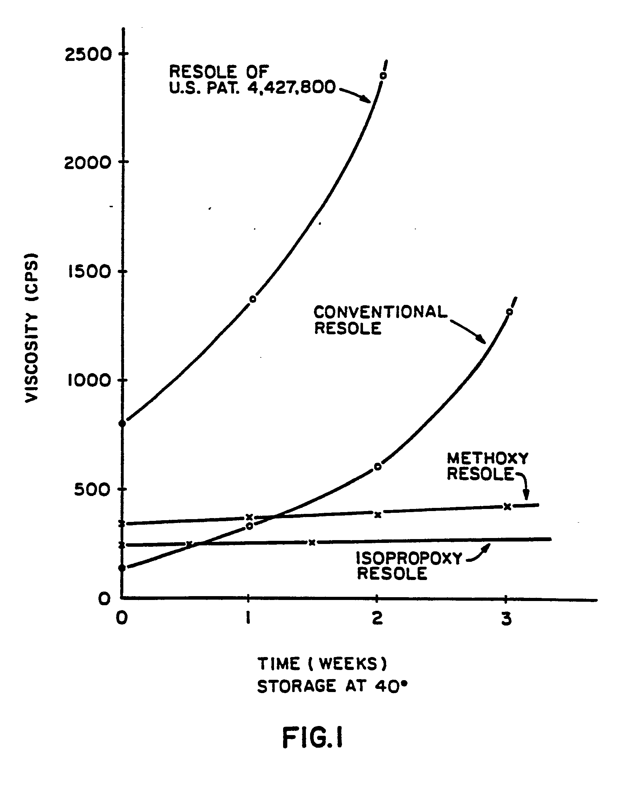

Fig. 1 is a plot comparing the viscosity versus storage time at 40°C for two resole resins of this invention with the viscosity of two resole resins of the prior art.

In accordance with this invention, there is provided a free-flowing granular material for the preparation of foundry cores and molds comprising an intimate mixture of sand, an acidic catalyst, and an alkoxy-modified phenolic resole resin binder containing at least one alkoxymethylene group for every 20 phenolic nuclei and having predominantly ortho-ortho benzylic ether bridges joining the phenolic nuclei in the resin.

Further, in accordance with this invention, there is provided a process for forming foundry cores and molds which comprises the steps of mixing sand with a resin binder and an acidic catalyst, forming the mixture of sand, catalyst, and resin binder to a desired shape, and curing the mixture, characterized in that the resin binder is an alkoxy-modified phenolic resole resin containing at least one alkoxymethylene group for every 20 phenolic nuclei and having predominantly ortho-ortho benzylic ether bridges joining the phenolic nuclei in the resin.

Finally, in accordance with this invention, there is provided a refractory mix consisting essentially of refractory particles and a modified phenolic resole binder characterized in that the resin binder is an alkoxy-modified phenolic resole resin containing at least one alkoxymethylene group for every 20 phenolic nuclie and having predominantly ortho-ortho benzylic ether bridges joining the phenolic nuclei in the resin.

In the practice of this invention, an alkoxy-modified phenolic resole resin is produced by heating a mixture of an aldehyde, a phenol, and a lower aliphatic alcohol in the presence of a divalent metal ion catalyst.

Alternatively, an unmodified phenolic resole resin is prepared by heating the aldehyde and phenol in the presence of the catalyst. This resin is then modified by heating with a lower aliphatic alcohol at a pH below 6.5 followed by dehydration to remove water produced in the reaction with the alcohol.

The preferred method for producing the alkoxy-modified phenolic resole resins of this invention involves reacting the phenol, the aliphatic alcohol and aqueous formaldehyde at an elevated temperature in the presence of a divalent metal ion catalyst. Excess water is removed by evaporation under reduced pressure. If desired, the dehydrated product can be held at an elevated temperature under vacuum to increase the viscosity of the product. The resulting resin can be diluted with a polar solvent to obtain a product with the desired viscosity.

Phenols suitable for preparing the modified phenolic resole resins of this invention are generally any of the phenols which may be utilized in the formation of phenolic resins, and include substituted phenols, as well as unbustituted phenol per se. The nature of the substituent can vary widely, and exemplary substituted phenols include alkyl-substituted phenols, aryl-substituted phenols, cycloalkyl-substituted phenols, alkenyl-substituted phenols, alkoxy-substituted phenols, aryloxy-substituted phenols, and halogen-substituted phenols. Specific suitable exemplary phenols include in addition to phenol per se, o-cresol, m-cresol, p-cresol, 3,5-xylenol, 3,4-xylenol, 3,4,5-trimethyl phenol, 3-ethyl phenol, 3,5-diethyl phenol, p-butyl phenol, 3,5-dibutyl phenol, p-amyl phenol, p-cyclohexyl phenol, p-octyl phenol, 3,5-dicyclohexyl phenol, p-phenyl phenol, p-crotyl phenol, 3,5-dimethoxy phenol, 3,4,5-trimethoxy phenol, p-ethoxy phenol, p-butoxy phenol, 3-methyl-4-methoxy phenol, and p-phenoxy phenol. A preferred phenolic compound is phenol itself.

The aldehyde employed in the formation of the modified phenolic resole resin employed in this invention can also vary widely. Suitable aldehydes include any of the aldehydes heretofore employed in the formation of phenolic resins, such as formaldehyde, acetaldehyde, proprionaldehyde, and benzaldehyde. In general, the aldehydes employed contain from 1 to 8 carbon atoms. The most preferred aldehyde is formaldehyde which may be used either as its aqueous solution or in its nonaqueous form as one of its solid polymers, such as paraformaldehyde.

Alcohols useful for preparing the alkoxy-modified phenolic resole resins of this invention are generally primary and secondary monohydric aliphatic alcohols containing from 1 to 8 carbon atoms. Examples of useful alcohols are methanol, ethanol, n-propanol, isopropanol, n-butanol, and hexanol. Methanol is a preferred alcohol.

Catalysts useful in production of the modified phenolic resole resins of the present invention include salts of the divalent ions of Mn, Zn, Cd, Mg, Co, Ni, Fe, Pb, Ca, and Ba. A preferred catalyst is zinc acetate. These catalysts give phenolic resole resins wherein the bridges joining the phenolic nuclei in the resin are predominantly ortho-ortho benzylic ether bridges of the general formula $-CH_2(OCH_2)_n-$ where n is a small positive integer.

At least 1 mole of aldehyde per mole of phenol is used to make the resole resins of this invention. It is preferable that the molar ratio of aldehyde to phenol be in the range of from about 1.2:1 to about 2.2:1.

In the preparation of the alkoxy-modified phenolic resole resins of the present invention, sufficient alcohol is used to ensure that the alkoxy-modified phenolic resole resin will have at least one alkoxymethylene group for every 20 phenolic hydroxyl groups present in the resin. The alkoxymethylene groups have the general formula $-(CH_2O)_nR$ where R is the alkyl group of the alcohol used, and n is a small positive integer. These groups are substituents at the positions ortho and para to the phenolic hydroxyl groups in the resin. When the molar ratio of alcohol to phenol in the reaction mixture is 1:1 or higher, the resulting products are satisfactory for use in the process of this invention, but the presence of larger amounts of alcohol tend to slow down the reaction between the phenol and the aldehyde and leave considerable amounts of unreacted alcohol to be evaporated at the end of the reaction.

When the modified phenolic resole resins of this invention are used as binders for refractory material, they are mixed with the refractory material in the presence of a polar solvent to give a refractory mix. The modified phenolic resin comprises from 1% to 25% by weight of the mix. This refractory mix is then used to make refractory articles of various shapes or forms. The mix in the desired form is heated to a high temperature to produce the hardened refractory shaped article.

The modified phenolic resole resins of this invention are particularly effective for refractory binder mixtures with basic refractory material, such as magnesia. However, they are also suitable for formulating refractory binder mixes with acidic materials, such as silica, and with neutral refractory materials, such as alumina. Other refractory materials, such as olivine, dolomite, chromite, zircon, and silicon carbide, can be used with the binders of this invention.

The process of forming "no-bake" cores and molds, according to the invention, involves mixing sand or other refractory material with an acid catalyst and a modified resole resin as herein described. The resin is usually employed as a solution for ease of coating on the sand.

Polar solvents are useful for preparing solutions of the resin. Such solvents include alcohols, ketones, and esters in which the resin is soluble. Exemplary compounds are methanol, ethanol, n-propanol, isopropanol, butanol, ethylene glycol, glycerine, furfuryl alcohol, acetone, butanone, cyclohexanone, and isophorone. Alcohols, such as methanol or isopropanol, are the preferred solvents. The solution can contain small amounts of water, but for optimum stability of the resin, it is preferable that the water content be less than 10% by weight of this solution. The viscosity of the solution is controlled by adjusting the amount of water and solvent present. A solution having a viscosity below about 100 mPas at 25°C is suitable for mixing with sand.

It is often the practice in the foundry art to include a variety of additives in the resins used to prepare foundry cores and molds. These additives include such materials as silanes, sources of fluoride ion, deodorizing agents and the like. When the resins are used in "no-bake" applications, it is often convenient to add urea which combines with the free formaldehyde present. Such additives may be used in the resins of the present process and do not interfere with the improved properties of these resins.

When the resins of this invention are used in the "no-bake" process, they are cured by means of an acidic catalyst. Any acidic catalysts ordinarily used for curing phenolic resins may be utilized. Generally, useful acids are strong organic acids, strong mineral acids, and combinations of these. Exemplary are such acids as benzene sulfonic acid, xylene sulfonic acid, p-toluene sulfonic acid, phenol sulfonic acid, methane sulfonic acid, sulfuric acid, and mixtures thereof.

Any of the refractory material commonly used to make foundry cores and molds can be mixed with the resin compositions of this invention. These include silica sands, lake sands, bank sands, zircon sand, chromite sand, olivine sand, and the like. Also, mixtures of these may be used.

As noted above, the process for forming "no-bake" cores and molds, according to this invention, involves mixing sand or other refractory material with an acidic catalyst and a resin material as herein described. This invention involves bringing the novel resin-sand-catalyst mixture into contact with metal patterns to form cores or molds suitable for casting metal, curing the core or mold and removing it from the pattern. The temperatures and procedures involved in formimg the molds and cores are those generally employed in the art.

The following examples illustrate the invention. It is to be understood that the examples are illustrative only and do not intend to limit the invention in any way. In the examples, all parts and percentages are by weight, the temperatures are degrees centigrade and the viscosity values are mPas unless otherwise indicated.

Example 1

A solution of 3891 g of phenol, 3603 g of a 50% formaldehyde solution, 639 g of methanol, and 311.4 g of a 25% solution of zinc acetate in water was refluxed for about 3 hours until the free formaldehyde content was between 6 and 8%. Free formaldehyde was determined by the standard hydroxylamine · hydrochloride method. Water was removed by heating under reduced pressure at 50°C. As the water was removed, the temperature slowly rose to 90°C. Then 639 g of methanol was added and the mixture was refluxed for an additional 7 hours until the free formaldehyde was less than 1.2%. The resulting resin was cooled and mixed with 200 g of methanol plus 12 g of *gamma*-aminopropyltriethoxy silane (available under the trade name Silane A-1100[R] from the Union Carbide Corp., New York, New York). Viscosity of the present solution was 131 mPas at 25°C. Refractive index at 25°C was 1.5384 and the solution also contained 0.7% free formaldehyde and 6% water.

The following sand tests were performed using the resin of Example 1 and, for a comparative test, a commercial unmodified resole resin. To a K-45 KitchedAid mixer was added 2500 g of Wedron 730[R] washed and dried silica sand. The sand was brought to a temperature of 38°C, 10 g of a catalyst comprising an 80% solution of benzene sulfonic acid plus about 1% sulfuric acid in methanol, was added and the combination was mixed for 1 minute. Then 27.5 g of the resin was added before mixing was continued for another minute. At various times after mixing, part of the sand mixture was used to form standard American Foundry Society 2.54-cm dog-bone tensile briquets, in a Dietert No. 696, 12-cavity tensile core box. The cores were cured at room temperature overnight. Tensile strengths of the cores were measured using a Detroit Testing Machine Company, Model CST tensile tester. Average tensile data are given in Table I. The rest of the sand was used to make a truncated pyramid core 30.5 cm high, 10 cm square at the base, and 5 cm square at the top, using a Dietert 623-50 core box. Sand was poured into the core box, jolted four times using a Dietert 623 core box jolter. A thermometer was inserted about 15 cm into the core. The strip time was determined as the time at which the core was cured so hard that the thermometer could no longer be pushed by hand deeper into the core. Test results are given in Table I.

TABLE I

| Mix containing resin of | Strip time (min) | Tensile strength (kg/cm$^2$) briquets formed after mix held for | | | | |
|---|---|---|---|---|---|---|
| | | 60 sec | 210 sec | 310 sec | 450 sec | 600 sec |
| Example 1 | 32 | 34 | 23 | 15 | 10 | 7.6 |
| Comparative test resin[a] | 12 | 27 | 9.1 | 6.1 | 0 | 0 |

[a] A commercial resole resin, SUPER SET 970[R], of the Acme Resin Corp., Forest Park, Illinois.

EP 0 179 360 B1

The test results in Table I show that foundry sand mixes prepared using the resin of this invention have a much longer useful working life than those prepared using conventional phenolic resole resins. Furthermore, when the phenolic resole resin is stored at 31°C, it shows an exponential increase in viscosity with time and becomes so viscous that it is not suitable for use after about 2 months. In contrast, the resins of the present invention show only slight increases in viscosity and are still useful after being held for a year at these temperatures.

Superiority of the modified resole resin of the present invention over the previously-used resole resin as a binder for reclaimed sand is shown in Table II. The results given in that table were obtained using the same test conditions as those reported in Table I except that reclaimed sand was used in place of fresh sand.

TABLE II

| Mix containing resin of | Strip time (min) | Tensile strength (kg/cm$^2$) briquets formed after mix held for | | | |
|---|---|---|---|---|---|
| | | 60 sec | 210 sec | 310 sec | 450 sec |
| Example 1 | 19 | 10 | 5.1 | 2.5 | 2.0 |
| Comparative test resin[a] | 7 | 4.8 | 0.2 | 0 | 0 |

[a] Same resin as comparative test resin of Table I.

Example 2

The general procedure of Example 1 was followed using 1297 g phenol, 1201 g of a 50% formaldehyde solution, 213 g of isopropanol in place of methanol, and 103.8 g of a 25% solution of zinc acetate in water. After the water had been removed by heating the mixture up to 90°C under vacuum, an additional 213 g of isopropanol was added and the mixture was refluxed for an additional 7 hours until the free formaldehyde was less than 1.2%. The resulting resin was cooled and diluted with a mixture of 64.1 g of methanol and 4.8 g of *gamma*-aminopropyltriethoxy silane. The resin had a refractive index of 1.5476 and a viscosity of 980 mPas at 25°C. It contained 0.65% free formaldehyde and 5.5% water. The results of tests using this as a resin binder for sand are given in Table III.

Example 3

The general procedure of Example 1 was followed using 1297 g of phenol, 1201 g of a 50% aqueous formaldehyde solution, 213 g of ethanol in place of the methanol, and 103.8 g of a 25% solution of zinc acetate in water. After the water had been removed by heating the mixture to 90°C under vacuum, an additional 213 g of ethanol was added. The mixture was refluxed for an additional 7 hours until the free formaldehyde was less than 1.2%. The resulting resin was cooled and mixed with 65 g of methanol and 4.8 g of Silane A-1100. The viscosity of the solution was 380 mPas at 25°C, the refractive index at this temperature was 1.5463, and it contained 0.8% free formaldehyde and 6.7% water. This resin was also mixed with sand and catalyst and the resulting mix was used to perform the tests as described in Example 1. The results of the tests are given in Table III which contains the results of tests on the resin of Example 1 for comparison purposes.

TABLE III

| Mix containing resin of | Strip time (min) | Tensile strength (kg/cm$^2$) briquets formed after mix held for | | | | |
|---|---|---|---|---|---|---|
| | | 60 sec | 210 sec | 310 sec | 450 sec | 600 sec |
| Example 1 (methoxy derivative) | 24 | 36 | 25 | 11 | 11 | 5.6 |
| Example 2 (isopropoxy derivative) | 13 | 27 | 14 | 3.7 | 2.0 | 0 |
| Example 3 (ethoxy derivative) | 15 | 33 | 21 | 11 | 4.3 | 1.2 |

5

The results in Table III show that the ethoxy- and isopropoxy-modified resole resins, as well as the methoxy derivative, are useful resins for preparing foundry sand mixes with an extended working life.

Example 4

A methoxy-terminated resin was made as in Example 1 except that the dehydration step was continued until the water content of the resin was only 0.8%. The resin had a viscosity of 548 mPas at 25°C and a refractive index of 1.5480. A blend of this resin and the resin of Example 1 was made to give a resin containing 3.2% water and with a viscosity of 262 mPas. Two other similar resins were obtained having water contents of 5.6 and 9.7% with viscosities of 142 and 109 mPas respectively. All four resins were used to prepare sand, catalyst, and resin mixes in the proportions described under Example 1, and the mixes were tested under the conditions given in that example except that the tensiles were determined after the briquets had been held for 5 hours rather than overnight. For comparison purposes, sand tests were also run using a commercial resol resin known to contain about 12% moisture and having a viscosity of 79 mPas at 25°C. Results of the tests are given in Table IV. It was noted that the resin solution containing 9.7% moisture was somewhat hazy, indicating that these resins would probably separate from solution if the water content was greater than 10%.

TABLE IV

| Mix using methoxy resin with | Strip time (min) | Tensile strength (kg/cm$^2$) briquets formed after mix held for | | | |
|---|---|---|---|---|---|
| | | 60 sec | 210 sec | 310 sec | 450 sec |
| 0.8% H$_2$O | 14 | 7.0 | 2.5 | 0.7 | 0 |
| 3.2% H$_2$O | 17 | 12 | 8.8 | 6.2 | 0 |
| 5.6% H$_2$O | 30 | 16 | 11 | 9.7 | 3.7 |
| 9.7% H$_2$O | 33 | 14 | 14 | 12 | 7.0 |
| Comparative resin[a] | 16 | 14 | 9.0 | 2.2 | 0 |

[a]Comparative resin of Table I.

Example 5

To 480 g of the resin solution of Example 1 was added 120 g of furfuryl alcohol. The viscosity of the resulting solution was 60 mPas at 25°C. Its refractive index at 25°C was 1.5325 and the solution contained 0.6% free formaldehyde and 4.5% water. Then the resin solution was mixed with sand and catalyst, and the mixture was used immediately in the sand tests of Example 1. Results of these tests are given in Table V. Similar sand tests were performed using a resin solution which had been held at 31°C for 1 week. The resin solution showed essentially no viscosity change during this week of incubation.

TABLE V

| Mix containing resin of | Strip time (min) | Tensile strength (kg/cm$^2$) after briquets held for | | |
|---|---|---|---|---|
| | | 2 hrs | 4 hrs | 24 hrs |
| Example 5 | 33 | 17 | 18 | 15 |
| Example 5 after holding 1 week at 31°C | 45 | 18 | 21 | 21 |

Example 6

A solution of 4287 g (45.6 moles) of phenol, 4432 g (73.9 moles) of a 50% formaldehyde solution, 787 g (24.6 moles) of methanol, and 342 g of a 25% solution of zinc acetate in water was refluxed for about 11 hours until the free formaldehyde content was less than 3%. The free formaldehyde was determined by the standard hydroxylamine-hydrochloride method. Then a solution of 23 g of citric acid in an equal amount of water was added, and water was removed from the mixture by heating at 55°C under reduced pressure. The temperature of the reactor was then raised to 95°C and heating was continued under vacuum until the viscosity (measured in a Model RVF Brookfield viscometer) of an 80% solution of the resin in methanol reached 400—450 mPas at 25°C. The resin was then cooled and diluted with 1 part by weight of methanol to each 4 parts by weight of resin. The resulting solution had a viscosity of 500 mPas at 25°C and a refractive index of 1.536 at 25°C and contained 0.25% of free formaldehyde.

A refractory mix (Mix 1) was prepared by the following procedure. To 2.27 kg of magnesite (Grade SM-60, available from American Minerals Inc., New Castle, Delaware) in a Hobart KitchenAid mixer was added a solution of 191.5 g of the resin in 63.8 g of isopropanol. The resin solution was added over a period of 60 seconds. The mixture was stirred for 2 minutes before a portion was removed and used immediately to prepare test core specimens. A second portion was used a week later to make additional tensile core specimens. The test specimens were American Foundry Society 2.54-cm dog-bone tensile briquets, using the apparatus described in Example 1. Cores were cured by heating in an oven maintained at 166°C for 2 hours. The cores were then allowed to cool to room temperature and tested on a Detroit Testing Machine Company, Model CST tensile tester. Average tensile data are given in Table VI for the cores made from the refractory mix immediately after its preparation, and for cores made from the refractory mix after it had stood for 1 week after its preparation.

Table VI also includes similar tensile strength data for a refractory mix (Mix 2) that contained 15% less resin binder for a given amount of magnesite. Comparative test results are also reported in Table VI for a commercial resole resin used as a refractory binder. The refractory mix prepared with a commercial resin was suitable for use immediately after mixing. However, as indicated in the table, the mixture containing this resin binder could not be rammed into the mold after it had been standing for 16 hours, and it was completely hard and unusable after it had been held for 1 week. In contrast, the refractory mixes of the present invention were still usable and gave cores of acceptable tensile strength even after the refractory mix had been held for 1 week.

TABLE VI

| | Tensile strength (kg/cm$^2$) | |
| --- | --- | --- |
| Material tested | Cores formed immediately after mixing | Cores formed 1 week after mixing |
| Mix 1 | 68 | 45 |
| Mix 2 | 57 | 49 |
| Comparative test mix[a] | 63 | —[b] |

[a] Test mixture was prepared using the same proportions as Mix 1. the resin was a conventional commercial resole resin used as a refractory binder containing 2.5% free formaldehyde, 15% water, and a viscosity of 120 mPas (25°C).

[b] The mixture was unusable after 16 hours and was completely hardened after standing 1 week at room temperature in a closed container.

Example 7

The general procedure of Example 6 was followed except that the reaction was terminated when the viscosity of an 80% solution of the resin in isopropanol reached 160—250 mPas. The resin was cooled and diluted with 1 part by weight of isopropanol to 4 parts by weight of resin. The resulting solution had a viscosity of 200 mPas (25°C), a refractive index of 1.5267 (25°C), and contained 2.27% of free formaldehyde. Test cores were prepared using this binder with alumina and with silica, and the tensile strengths of the cores were compared with those prepared using a commercial resole resin binder with the same refractories. The alumina was Alcoa T-61[R], a 0.044 mm sieve calcined alumina, available from the Aluminum Company of America, Pittsburgh, Pennsylvania. The silica was 0.105 mm sieve silica flour, available from the Ottawa Silica Company, Ottawa, Illinois. In all cases, the mix contained 2.27 kg of the refractory, 163 g of the resin, and 63 g of added isopropanol. The results given in Table VII indicate that the resins of the present invention give refractory articles prepared from alumina and silica with comparable strengths to those made from the same refractories using a commercial resole resin. All of the test specimens were baked shortly after the refractory mixes had been prepared.

Carbon-13 NMR analysis of the resin of this example gave a methylol group index of 2.1. The methylol group index is defined by Nakamura, et al, U.S. Patent 4,427,800. Carbon absorption of the resin is determined in a carbon-13 NMR analytical instrument. The methylol group index is calculated by dividing the integrated value of carbon absorption as peak strength of methylol group shifting at 60—68 ppm by the peak strength of the carbon connected to the hydroxyl group of phenols shifting at 145—160 ppm.

Comparison of the integrated value of carbon absorption of the methoxy group shifting at 57—58 ppm with the peak strength of the carbon connected to the hydroxyl group of phenols shifting at 145—160 ppm indicated that the resin contained at least one methoxy methylene group for every 3.4 phenolic hydroxyl groups.

Table VII

| Refractory mix | Tensile strength (kg/cm$^2$) after heating for | | | |
|---|---|---|---|---|
| | 1 hr | 1-1/2 hr | 2 hr | 3 hr |
| Alumina+resin of Example 2 | 23 | 24 | 26 | — |
| Alumina+comparative test resin[a] | 25 | 29 | 35 | — |
| Silica+resin of Example 2 | 14 | — | 16 | 14 |
| Silica+comparative test resin[a] | 13 | — | 13 | 12 |

[a]Comparative test resin same as in Table VI.

Example 8

An isopropoxy modified phenolic resole resin was prepared by the general procedure of Example 6 using 1201 g (20 moles) of a 50% aqueous solution of formaldehyde, 1297 g (13.8 moles) of phenol, 213 g (3.55 moles) of isopropanol, and 104 g of a 25% aqueous solution of zinc acetate. When 4 parts by weight of the resin were diluted with one part by weight of isopropanol, the resulting solution had a viscosity of 252 mPas (25°C), a refractive index of 1.5307 (25°C), and contained 2.82% of free formaldehyde. Carbon-13 NMR analysis of the resin showed that it had a methylol group index of 3.2 and that it contained one isopropoxy methylene group for every 20 phenolic hydroxyl groups.

Refractory mixes were prepared from this resin with magnesia and alumina using the procedure and proportions of materials as given in Mix 2 of Example 6. When test cores were prepared from freshly mixed material and baked at 166°C for 2 hours, the cores made with magnesite had a tensile strength of 68 kg/cm$^2$, and those prepared with alumina had a tensile strength of 27 kg/cm$^2$. A core prepared after the mix with magnesite had been held for 20 hours also had a tensile strength of 68 kg/cm$^2$. These results indicate that the isopropoxy modified liquid phenolic resole resin of this example gives refractory test specimens of comparable strength to those prepared with the methoxy modified liquid phenolic resole resins, and that refractory mixes prepared from it can be held after mixing without losing their usefulness.

Samples of the alkoxy modified resins of Examples 7 and 8 were held in closed glass jars at 40°C to determine their storage stability. The commercial resole resin used in the comparative tests reported in Tables VI and VII and the refractory binder resin of Example 1 of U.S. Patent 4,427,800 were stored in the same manner. The results are shown graphically in the drawing. The modified resins showed only slight viscosity increases (about 5% or less per week) under such storage conditions. In contrast, the viscosities of the comparative test resins showed an almost exponential increase in viscosity with their viscosities nearly doubling each week. This test shows the excellent storage stability of the resins of this invention and their superiority in this property over the conventional resole resins of the prior art.

## Claims

1. A free-flowing granular material for the preparation of foundry cores and molds which comprises an intimate mixture of sand, an acidic catalyst and an alkoxy-modified phenolic resole resin binder containing at least one alkoxymethylene group for every 20 phenolic nuclei and having predominantly ortho-ortho benzylic ether bridges joining the phenolic nuclei in the resin.

2. The granular material of claim 1 characterized in that the phenolic resole resin is prepared from phenol and formaldehyde.

3. The granular material of claim 1 or 2 characterized in that the alkoxy group of the alkoxy-modified phenolic resole resin is selected from the group consisting of methoxy, ethoxy, and isopropoxy.

4. The granular material of claims 1, 2 or 3 characterized in that the acidic catalyst is a sulfonic acid catalyst.

5. A process for forming foundry cores and molds comprising the steps of mixing sand with a resin binder and an acidic catalyst, forming the mixture of sand, catalyst, and resin binder to a desired shape, and curing the mixture, characterized in that the resin binder comprises an alkoxy-modified phenolic resole resin binder containing at least one alkoxymethylene group for every 20 phenolic nuclei and having predominantly ortho-ortho benzylic ether bridges joining the phenolic nuclei in the resin.

6. A refractory mix consisting essentially of refractory particles and a phenolic resole resin binder characterized in that the resin binder comprises an alkoxy-modified phenolic resole resin binder containing at least one alkoxy-methylene group for every 20 phenolic nuclei and having predominantly ortho-ortho benzylic ether bridges joining the phenolic nuclei in the resin.

7. The refractory mix of claim 6 characterized in that the resin binder comprises from 1% to 25% by weight of the mix.

8. A refractory shaped article prepared by heating the refractory mix of claim 6 or 7.

**Patentansprüche**

1. Fließfähiges körnchenförmiges Material zur Herstellung von Gießkernen und -formen, umfassend ein inniges Gemisch aus Sand, einen sauren Katalysator und ein Alkoxy-modifiziertes Phenolresolharzbindemittel, das wenigstens eine Alkoxymethylengruppe für alle 20 Phenolkerne enthält und überwiegend Ortho-Ortho-Benzyletherbrücken aufweist, die die Phenolkerne in dem Harz verbinden.

2. Körnchenförmiges Material nach Anspruch 1, dadurch gekennzeichnet, daß das Phenolresolharz aus Phenol und Formaldehyd hergestellt ist.

3. Körnchenförmiges Material nach Anspruch 1 oder 2, dadurch gekennzeichnet, daß die Alkoxygruppe des Alkoxymodifizerten Phenolresolharzes ausgewählt ist aus der Gruppe bestehend aus Methoxy, Ethoxy und Isopropoxy.

4. Körnchenförmiges Material nach Anspruch 1, 2 oder 3, dadurch gekennzeichnet, daß der saure Katalysator ein Sulfonsäurekatalysator ist.

5. Verfahren zum Formen von Gießkernen und -formen, das die folgenden Schritte umfaßt: Mischen von Sand mit einem Harzbindemittel und einem sauren Katalysator, Formen der Mischung aus Sand, Katalysator und Harzbindemittel in eine gewünschte Form und Aushärten der Mischung, dadurch gekennzeichnet, daß das Harzbindemittel ein Alkoxymodifiziertes Phenolresolharzbindemittel umfaßt, das wenigstens eine Alkoxymethylengruppe für alle 20 Phenolkerne enthält und überwiegend Ortho-Ortho-Benzyletherbrücken, die die Phenolkerne in dem Harz verbinden, enthält.

6. Feuerfeste Mischung bestehend im wesentlichen aus feuerfesten Teilchen und einem Phenolresolharzbindemittel, dadurch gekennzeichnet, daß das Harzbindemittel ein Alkoxymodifiziertes Phenolresolharzbindemittel umfaßt, das wenigstens eine Alkoxymethylengruppe für alle 20 Phenolkerne enthält und überwiegend Ortho-Ortho-Benzyletherbrücken, die die Phenolkerne in dem Harz verbinden, enthält.

7. Feuerfeste Mischung nach Anspruch 6, dadurch gekennzeichnet, daß das Harzbindemittel 1 bis 25 Gew.-% der Mischung umfaßt.

8. Feuerfester, geformter Gegenstand, der durch Erhitzen der feuerfesten Mischung nach Anspruch 6 oder 7 hergestellt ist.

**Revendications**

1. Matière granulaire à écoulement libre pour la preparation de coeurs et de moules de fonderie, qui comprend un mélange intime de sable, d'un catalyseur acide et d'un liant constitué par une résine à base de résols phénoliques alcoxy-modifiés contenant au moins un groupe alcoxyméthylène pour 20 noyaux phénoliques et présentant des ponts éther benzylique ortho-ortho de façon prédominante reliant les noyaux phénoliques de la résine.

2. Matière granulaire suivant la revendication 1, caractérisée en ce que la résine à base de résols phénoliques est préparée à partir de phénol et de formaldéhyde.

3. Matière granulaire suivant la revendication 1 ou 2, caractérisée en ce que le groupe alcoxy de la résine à base de résols phénoliques alcoxy-modifiés est choisi dans le groupe consistant en méthoxy, éthoxy et isopropoxy.

4. Matière granulaire suivant les revendications 1, 2 ou 3, caractérisée en ce que le catalyseur acide est un catalyseur à base d'un acide sulfonique.

5. Procédé de formation de coeurs et de moules de fonderie comprenant les étapes suivant lesquelles on mélange du sable avec un liant constitué par une résine et avec un catalyseur acide, on met sous une forme désirée, le mélange de sable, de catalyseur et de liant, et on fait durcir le mélange, caractérisé en ce que ledit liant comprend une résine à base de résols phénoliques alcoxy-modifiés contenant au moins un groupe alcoxyméthylène pour 20 noyaux phénoliques et présentant des points éther benzylique ortho-ortho de façon prédominante reliant les noyaux phénoliques de la résine.

6. Mélange réfractaire consistant essentiellement en particules réfractaires et en un liant constitué par une résine à base de résols phénoliques, caractérisé en ce que ledit liant comprend une résine à base de résols phénoliques alcoxy-modifiés contenant au moins un groupe alcoxyméthylène pour 20 noyaux phénoliques et présentant des ponts éther benzylique ortho-ortho de façon prédominante reliant les noyaux phénoliques de la résine.

7. Mélange réfractaire suivant la revendication 6, caractérisé en ce que le liant constitué par une résine représente de 1% à 25% en poids du mélange.

8. Article réfractaire façonne préparé par chauffage du mélange réfractaire suivant la revendication 6 ou 7.

FIG.I